# EUROPÄISCHE PATENTSCHRIFT

(11) **EP 2 240 363 B1**
(45) Veröffentlichungstag und Bekanntmachung des Hinweises auf die Patenterteilung: **17.08.2011**
(21) Anmeldenummer: 09708461.0
(22) Anmeldetag: 29.01.2009
(51) Int. Cl.: B64C 1/14, C08J 5/04

(54) **LASTTRAGENDES UND SCHADENSTOLERANTES LAMINATFLUGZEUGFENSTER UND VERFAHREN ZU SEINER HERSTELLUNG**
LOAD-SUPPORTING AND DAMAGE-TOLERANT LAMINATED AIRCRAFT WINDOW AND ITS FABRICATION METHOD
FENETRE D'AVION STRATIFIEE PORTEUSE TOLERANTE AUX DOMMAGES ET PROCEDE POUR SA FABRICATION.

(30) Priorität: 05.02.2008 DE 102008007545; 05.02.2008 US 63625
(43) Veröffentlichungstag der Anmeldung: 20.10.2010
(73) Patentinhaber: Airbus Operations GmbH, 21129 Hamburg (DE)
(72) Erfinder: ABEL, Bengt, 20535 Hamburg (DE); EDELMANN, Klaus, 28199 Bremen (DE); HARTWIG, Arne, 20251 Hamburg (DE); HOPPMANN, Klaus, 27749 Delmenhorst (DE); WIETING, Jens, 28259 Bremen (DE)
(74) Vertreter: Peckmann, Ralf
(86) Internationale Anmeldenummer: PCT/EP2009/050972
(87) Internationale Veröffentlichungsnummer: WO 2009/098159

(56) Entgegenhaltungen:
- WO-A-00/20275
- DE-A1-102005 010 252
- US-A- 5 039 566
- US-A1- 2004 062 934
- US-A1- 2005 053 765

## Beschreibung

Die Erfindung betrifft ein Fenster für ein Fahrzeug, insbesondere für ein Flugzeug. Heutzutage weisen herkömmliche Flugzeugfenster üblicherweise einen Fensterrahmen, eine äußere und eine innere Fensterscheibe, Dichtungen, ein Halterelement (auch "Retainer" genannt) und Verbindungselemente zum Verbinden mit dem Flugzeug auf. Dabei bilden die äußere und die innere Fensterscheibe zusammen mit der Dichtung ein so genanntes Fensterset. Die im Fensterset integrierte äußere Fensterscheibe nimmt im Flugbetrieb nur solche Lasten auf, die aus dem Differenzdruck zwischen dem Innenraum der Flugzeugkabine und der Umgebung resultieren. Alle übrigen Lasten, die etwa in der Rumpfstruktur auftreten, werden unter anderem durch einen den Fensterausschnitt verstärkenden Fensterrahmen um den Fensterausschnitt herumgeleitet.

Herkömmliche Flugzeugfenster werden üblicherweise mittels der Fail-Safe-Bauweise so ausgelegt, dass beim Versagen der äußeren Fensterscheibe während des Flugs durch Lastübernahme der Kabinendruck durch die innere Fensterscheibe aufrecht erhalten werden kann, so dass eine sichere Landung des Flugzeugs gewährleistet wird.

Die Dichtung eines herkömmlichen Flugzeugfensters stellt außer der eigentlichen Abdichtung des Fenstersets gegenüber der Umgebung auch dessen Verbindung und Positionierung im Fensterrahmen bereit. Zusätzlich sorgt die Dichtung für den korrekten Abstand zwischen der äußeren und inneren Fensterscheibe.

Zur Erlangung eines optisch einwandfreien Fugenbildes auf der Außenseite des Flugzeugs ist das Fensterset äußerst präzise zu montieren. Das Halterelement hält das Fensterset im Fensterrahmen, so dass es weder bei der Montage, noch im Falle eines zum Innenraum hin wirkenden Druckgefälles herausfallen kann.

Die geschilderten herkömmlichen Fahrzeug- bzw. Flugzeugfenster weisen eine Reihe von Nachteilen auf. Zum einen ist die Größe des Fensters durch die Gestaltung und auftretende Belastung des Fensterrahmens beschränkt. Weiterhin ist die Herstellung der Fensterscheiben durch ein übliches Verfestigungsverfahren aufwändig. Der Fensterwerkstoff schrumpft zudem unter Wärmeeinfluss, altert unter Haarrissbildung und reagiert empfindlich auf chemische Einflüsse (z. B. Alkohol). Aufgrund der Vielzahl an Elementen ist die Montage aufwändig, was sich durch sorgsame Handhabung des Fenstersets, die geforderte präzise Positionierung im Fensterrahmen und die Vielzahl an Verbindungselementen begründet.

Die DE 102005010 252 zeigt ein schadenstokvantes Fenster mit allen Merkmalen des Oberbegriffs der unabhängigen Ansprüche 1 und 8

Die Aufgabe der Erfindung ist das Verringern oder Eliminieren der vorangehend geschilderten Nachteile. Insbesondere ist Aufgabe der Erfindung, ein Fenster für ein Fahrzeug vorzuschlagen, das nicht nur leicht und präzise montierbar ist, sondern auch schadenstolerant ausgeführt ist und dazu befähigt ist, die im Fensterbereich auftretenden Strukturlasten vollständig aufzunehmen.

Die Aufgabe wird gelöst durch ein Fenster für ein Fahrzeug, das ein transparentes und aus einem Verbundwerkstoff gefertigtes schadenstolerantes Scheibenelement aufweist, wobei das Scheibenelement zur Aufnahme von Strukturlasten geeignet ist.

Die Besonderheit des erfindungsgemäßen Fensters liegt darin begründet, dass das Fenster vollständig Last tragend ist. Durch die Last tragende Auslegung des Fensters kann - der beispielhaften Verwendung im Flugzeug folgend - insbesondere im Vergleich zu herkömmlichen Flugzeugfenstern deutlich Gewicht eingespart werden, was aus dem Wegfall von Fensterrahmen und Halterelement resultiert.

Diese Aufgabe wird durch die Merkmale der Ansprüche 1 und 8 gelöst.

Der Verbundwerkstoff weist vorzugsweise Fasern und ein Matrixmaterial auf, bei dem die Fasern und das Matrixmaterial transparent sind und im Wesentlichen den gleichen Brechungsindex aufweisen. Durch Verwenden des gleichen Brechungsindex weist der Verbundwerkstoff optisch konstante Eigenschaften auf, so dass als Resultat die Fasern praktisch unsichtbar sind. Gleichzeitig mit den für ein Fenster notwendigen Transparenzeigenschaften weist das erfindungsgemäße Fenster die mechanischen Eigenschaften eines Faserverbundwerkstoffs auf, der dem Fenster eine sehr hohe Festigkeit und angepasste Steifigkeit verleiht. Auch dies führt zu einer Einsparung von Gewicht, da das Fenster nicht nur die Lasten aus der Druckdifferenz zwischen dem Innenraum des Fahrzeugs und der Umgebung aufnehmen kann, sondern auch die um das Fenster herum entstehenden Strukturlasten. Ein diese Lasten um das Fenster herum leitender Fensterrahmen wird dadurch unnötig.

Zusätzlich ergeben sich weitere Gewichts- und Kostenvorteile durch die Schadenstoleranz des erfindungsgemäßen Fensters, da die Last tragenden Eigenschaften auch bei Beschädigung des Fensters einen sicheren Betrieb des Flugzeugs gewährleisten können.

Zudem ist das erfindungsgemäße Fenster durch seine schadenstolerante und Last tragende Auslegung in Größe und Form frei gestaltbar. Zusätzlich ist das verwendete Material beständiger gegenüber Alterung und erfordert somit geringeren Wartungsaufwand. Schließlich wird durch die geringere Bauhöhe aufgrund des Wegfalls einer zweiten (inneren) Fensterscheibe für den Passagier eine größere Schulterfreiheit erreicht.

Schließlich ist eine hohe Qualität der äußeren Oberfläche des Fahrzeugs mit wesentlich geringerem Aufwand zu erreichen als mit herkömmlichen Fenstern, da die potentiell hervorstehenden und die glatte Oberfläche störenden Fensterrahmen und Dichtungen entfallen.

Die Aufgabe wird ferner durch ein Verfahren zum Herstellen eines Fahrzeugfensters mit den vorangehend genannten Merkmalen gelöst.

Die Erfindung wird nachfolgend anhand der Figuren mit Ausführungsbeispielen eines Flugzeugfensters näher erläutert. In den Figuren werden gleiche Objekte durch gleiche Bezugszeichen gekennzeichnet. Es zeigen:
- Fig. 1a:: Eine schematische Ansicht eines Rumpfabschnitts mit einem länglichen Flugzeugfenster,
- Fig. 1b:: einen Seitenschnitt eines Rumpfabschnitts mit einem länglichen Flugzeugfenster,
- Fig. 2a:: eine schematische Ansicht eines Rumpfabschnitts mit einem einlaminierten Flugzeugfenster,
- Fig. 2b:: einen Schnitt einer Haut mit einem einlaminierten Flugzeugfens- ter, und
- Fig. 3:: eine schematische Darstellung eines Verfahrens zum Herstellen eines erfindungsgemäßen Fahrzeugfensters.

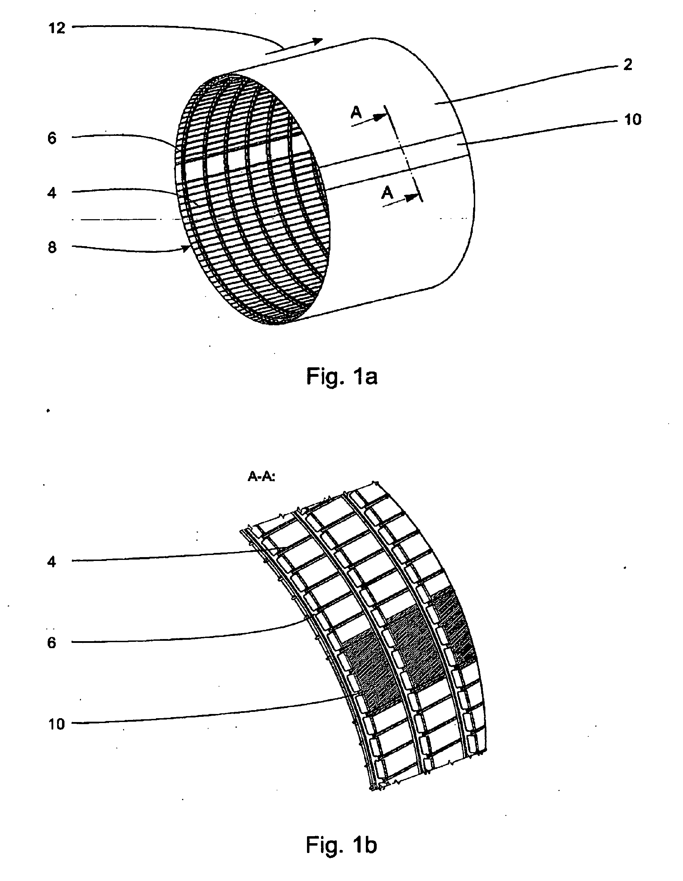

Der in Figur 1 a dargestellte Abschnitt eines Flugzeugrumpfs 2 weist beispielhaft eine Anordnung von Stringern 4 zur Längsversteifung und Spanten 6 zur Querversteifung des Rumpfs 2 auf. Die Stringer 4 und Spanten 6 sind auf der Innenseite der Haut 8 des Flugzeugrumpfs 2 angeordnet und befestigt. Diese Darstellung eines mittels der Barrelbauweise hergestellten Flugzeugrumpfs 2 ist lediglich als Beispiel zu verstehen und soll nicht als Beschränkung der Erfindung zu interpretieren sein. Die nachfolgend erörterten Wirkungsweisen und Vorteile der Erfindung sind auch im Zusammenhang mit alternativen Rumpfbauweisen und beliebigen Rumpfmaterialien denkbar, die etwa das Vorhandensein von Stringern oder anderen Verstärkungs- bzw. Versteifungsbauteilen überflüssig machen können.

Bei dem gewählten Beispiel ist in die Haut 8 weiterhin ein erfindungsgemäßes Flugzeugfenster 10 integriert, das eine bandartige, längliche Form aufweist und sich zumindest abschnittsweise im Wesentlichen parallel zur Flugzeuglängsrichtung 12 erstreckt. Es ist nicht erforderlich, dass das Flugzeugfenster 10 über die gesamte Länge eines - zumindest bei der Barrelbauweise - Rumpfabschnitts (Barrels) reicht. Je nach Wunsch kann bei der Auslegung die Länge des Flugzeugfensters 10 unabhängig von vordefinierten Rumpfabschnitten beliebig gewählt werden. Das Flugzeugfenster 10 ist als transparentes und aus einem Verbundwerkstoff gefertigtes Scheibenelement realisiert. Der Verbundwerkstoff ist dabei bevorzugt ein Faserverbundwerkstoff mit Fasern und einem Matrixmaterial. Die Fasern sind transparent und weisen im Wesentlichen den gleichen Brechungsindex auf wie das Matrixmaterial. Durch den gleichen und konstanten Brechungsindex innerhalb des gesamten Materials sind die Fasern in dem Material selbst nicht mehr erkennbar. Bei der Auswahl der transparenten Fasern (bspw. Glasfasern oder Polymerfasern), die im Optimalfall eine geeignete Schlichte und/oder ein geeignetes Finish aufweisen und eines geeigneten Matrixmaterials auf Basis synthetischer Polymerkunststoffe (rein exemplarisch könnte dies unter vielen weiteren denkbaren Kunststoffen Epoxydharz, Phenolharz oder eine andere Harzart sein) weist der Verbundwerkstoff für Fensterscheiben geeignete Transparenzeigenschaften auf. Das Fasermaterial kann dabei in beliebigen Formen vorliegen, sei es als einzelne Faserstränge, Geflechte oder Matten mit Wirrfasern. In Bezug auf die Verwendbarkeit von Phenolharzen sei an dieser Stelle angemerkt, dass ausgehärtetes Phenolharz bei mechanischer Belastung zwar häufig brüchig bzw, spröde wird, das Brandverhalten in Bezug auf Durchbrennfestigkeit und ähnliche Parameter jedoch günstiger als bei Epoxydharzen zu bewerten ist. Die Verwendung von Phenolharz für die Herstellung von erfindungsgemäßen Flugzeugfenstern sollte daher prinzipiell nicht ausgeschlossen werden.

Eine exemplarische Befestigungsvariante des Fensters 10 an der Haut 8 wird mit einer Schnittdarstellung in Fig. 1b dargestellt, deren Schnittebene in Fig. 1a gekennzeichnet ist. Dort wird gezeigt, dass das Flugzeugfenster 10 wie die übrigen Teile der Haut 8 als Schalenelement ("Panel") - sowohl bei der Barrelbauweise als auch bei der Schalenbauweise - einen integralen Teil der Haut 8 bildet. Dies bedeutet, dass die Haut 8 aus mehreren Schalenelementen oder Barreln und den als Flugzeugfenster 10 ausgeführten Schalenelementen zusammengesetzt wird. Ein erfindungsgemäßes und wie dargestellt längliches Flugzeugfenster 10 kann dabei mit den angrenzenden Schalenelementen oder Barreln auf übliche Art kraft-, form- oder stoffschlüssig verbunden werden (z. B. verbolzt, verschweißt oder verklebt).

Die Montage eines länglichen Flugzeugfensters 10 ist im Vergleich zu herkömmlichen Flugzeugfenstern besonders vorteilhaft, da nicht für jede Sitzreihe innerhalb der Flugzeugkabine ein Flugzeugfenster aus innerer und äußerer Scheibe, der Dichtung und dem Halterelement zusammengesetzt und in der Haut 8 angebracht werden muss. Das als Flugzeugfenster 10 ausgeführte Schalenelement lässt sich annähernd so einfach bearbeiten und montieren wie ein herkömmliches Schalenelement. Weiterhin ist die Erstreckung des Flugzeugfensters 10 in die Passagierkabine des Flugzeugs hinein aufgrund der Dicke des Flugzeugfensters 10 sehr gering. Wird die Bereitstellung von definierten Fensterbereichen für die einzelnen Sitzreihen in der Flugzeugkabine gefordert, können durch gezielte Ausgestaltung der Kabineninnenverkleidung und der Lackierung des Flugzeugrumpfs lichtdurchlässige Bereiche im Flugzeugfenster 10 definiert werden. Diese lichtdurchlässigen Bereiche können jede beliebige geometrische Form annehmen und sind flächenmäßig nicht beschränkt.

Die Handhabung eines als längliches Flugzeugfenster 10 ausgeführten Schalenelements im Vergleich zu herkömmlichen Flugzeugfenstern ist auch dadurch besonders einfach, da im Optimalfall keine zusätzlichen Fensterversteifungen in Form von Fensterrahmen oder dergleichen notwendig sind. Das erfindungsgemäße Flugzeugfenster 10 selbst ist ausreichend steif und fest, um alle auftretenden Strukturlasten selbst aufnehmen zu können und den zusätzlichen Schadenstoleranzanforderungen zu genügen. Herkömmliche Versteifungsbauteile Stringer 4 und Spante 6 können auch im Bereich des Flugzeugfensters 10 angebracht werden. Die Integration einer zusätzlichen (zweiten) Scheibe zu dem eigentlichen Flugzeugfenster 10 ist nicht erforderlich, da das Flugzeugfenster 10 schadenstolerant ausgeführt ist. Dies bedeutet, dass die Festigkeit des Flugzeugfensters 10 auch bei dessen Beschädigung ausreicht, um die Abdichtung des Flugzeugrumpfs und die Aufnahme der Strukturlasten während des gesamten Flugzeuglebens zuverlässig zu gewährleisten.

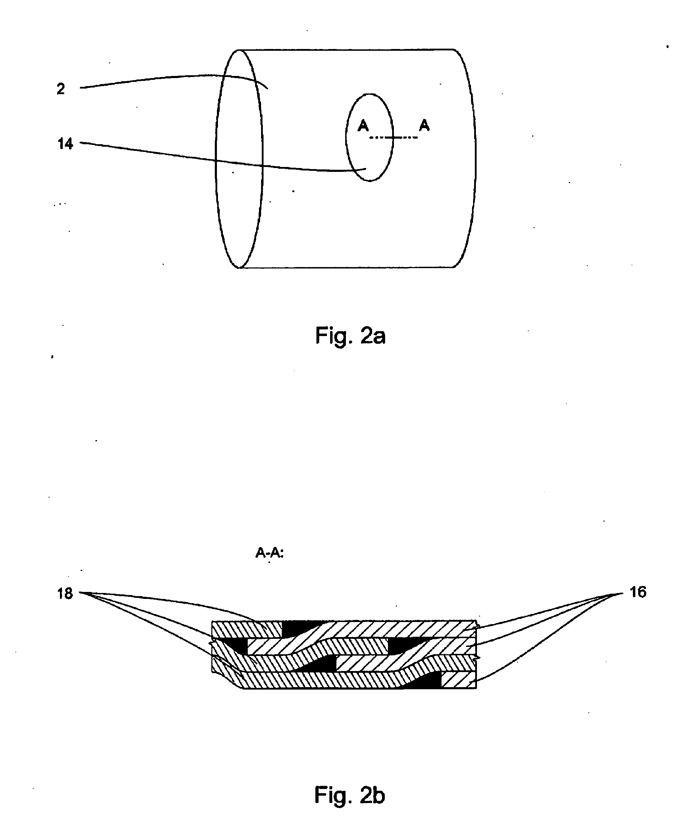

Erfindungsgemäß wird in den Fig. 2a und 2b mit einem einlaminierten Flugzeugfenster 14 gezeigt, welches exemplarisch eine ovale Form aufweist. Die Anwendung dieses Ausführungsbeispiels beschränkt sich auf Flugzeugrümpfe 2, die aus einem Verbundmaterial wie Faserverbundwerkstoffen oder Faser-Metall-Laminaten und dergleichen bestehen. Dort wird bereichsweise an Fensterpositionen das strukturelle Basismaterial durch das erfindungsgemäße transparente Faserverbundmaterial substituiert, um die Rumpfstruktur in diesen Bereichen transparent zu machen.

In Fig. 2b wird exemplarisch eine Laminatlagensubstitution dargestellt. Das strukturelle Basismaterial besteht aus mehreren Laminatlagen 16, die mit transparenten Laminatlagen 18 überlappt werden. Der in der Zeichnungsebene nach links folgende Bereich in Fig. 2b ist demnach transparent, der nach rechts folgende Bereich nicht. Hierbei muss jedoch gewährleistet werden können, dass das für das erfindungsgemäße Fenster zu verwendende Matrixmaterial auch als Matrixmaterial für das strukturelle Basismaterial verwendet werden kann oder dass zumindest eine Materialverträglichkeit gegeben ist. Die Art der Einbindung des Fensters in die Struktur ist neben der überlappenden Bauweise auch durch spezielle Faserhalbzeuge denkbar, in die transparente Bereiche integriert sind. Alle denkbaren Fertigungsverfahren zum Herstellen von Laminaten sind vor dem Hintergrund der Laminatlagensubstitution anwendbar und umfassen - um nur einige zu nennen - Prepregverfahren, Nasslaminierverfahren und auch Trocken- bzw. Infusions-Verfahren. Die Art der Substitution der Laminatlagen muss nicht der in Fig. 2b dargestellten Variante entsprechen. Die Laminatlagen müssen nicht 1:1 substituiert werden, so dass sich auch die Laminatdicke bei alternativen Überlappungsverfahren ändern kann.

Zur zusätzlichen Verstärkung können rahmenartige Strukturen mittels lokaler Anpassungen des Laminates integriert werden. Bei größeren Fenstern ist es ferner vorstellbar, unter Umständen transparente Versteifungselemente auch im sichtbaren Bereich der Flugzeugfenster mit einzulaminieren, aufzukleben oder mittels Verbindungselementen anzubinden.

Ein zusätzliches und nicht dargestelltes Ausführungsbeispiel umfasst Fenster, die aus einem transparenten Faserverbundmaterial gefertigt sind und nicht in einem Rahmen gefasst, sondern direkt mit der das Fenster umgebenden Struktur verschraubt, verbolzt oder verklebt werden. Dies ist deshalb möglich, da die Fenster auf Grund Ihrer statischen Eigenschaften Lasten übertragen können, die bei herkömmlichen Fenstern sonst mittels des Fensterrahmens um das Fenster herumgeleitet werden müssten.

Zur Erlangung besserer statischer Eigenschaften des Fensters kann der mit der umliegenden Struktur verbundene Fensterrand mittels Strukturprofilen oder anderen transparenten oder nicht transparenten Werkstoffen verstärkt oder aufgedickt werden. Derartige Verstärkungen sind auch Im Sichtbereich des Fensters möglich, sofern sie die Sicht nicht unakzeptabel einschränken.

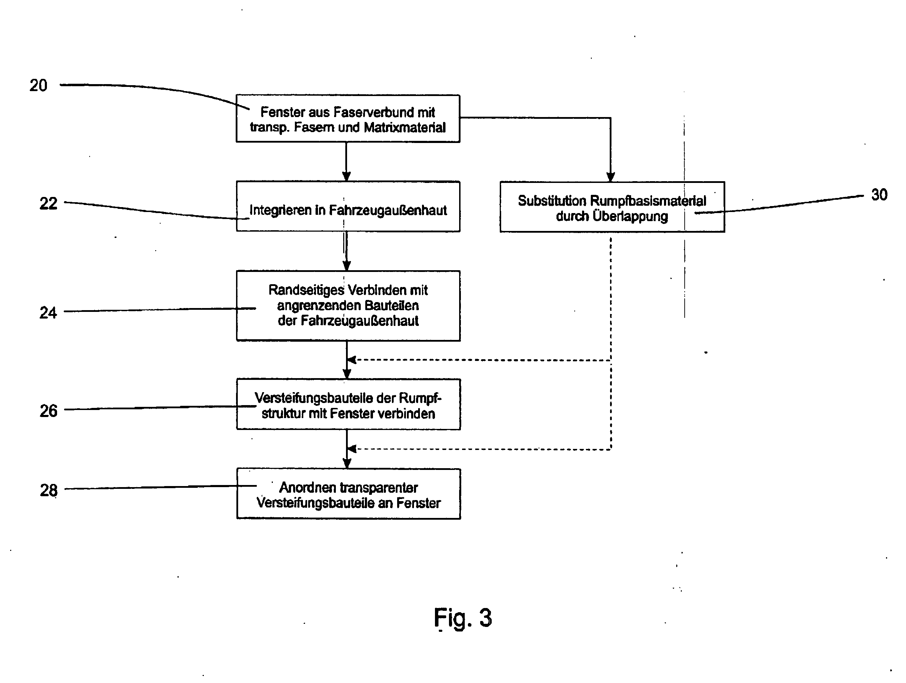

Die wesentlichen Verfahrensschritte zum Herstellen eines Fahrzeugfensters mit den erfindungsgemäßen Merkmalen werden anhand von Fig. 3 dargestellt, die im Folgenden am Beispiel Flugzeugfenster erläutert wird.

Das Flugzeugfenster wird aus einem Faserverbund mit transparenten Fasern und einem Matrixmaterial ausgeführt 20, welches in die Flugzeughaut integriert wird 22, etwa durch randseitiges Verbinden mit angrenzenden Bauteilen der Flugzeughaut 24. Versteifungsbauteile des Flugzeugrumpfs können zusätzlich mit dem Fenster verbunden werden 26, ebenso können - falls erforderlich - transparente Versteifungsbauteile zur Steigerung der Festigkeit des Fensters am Fenster angeordnet werden 28.

Alternativ zu der Integration des Fensters in die Haut durch randseitiges Verbinden käme auch die Substitution von Basismaterial des Rumpfs in Betracht, etwa beispielsweise durch das vorangehend geschilderte Überlappungsverfahren 30.

Mit dem vorgestellten erfindungsgemäßen Fahrzeugfenster wird eine deutliche Gewichts- und Kosteneinsparung gegenüber herkömmlichen Fahrzeugfenstern erreicht, was im Wesentlichen auf die Last tragenden und schadenstoleranten Eigenschaften zurückzuführen ist. Die Erfindung wird anhand mehrerer Ausführungsbeispiele beschrieben, die sich insbesondere auf Flugzeugfenster beziehen. Diese Ausführungsbeispiele sind nicht als Beschränkung der Erfindung zu verstehen, sondern dienen lediglich der Illustration. Der beanspruchte Einsatzbereich wird durch die Patentansprüche definiert, die eine Verwendung in jedem beliebigen Fahrzeug vorsehen. Neben Flugzeugen können jegliche Kraftfahrzeuge, Eisenbahnen, Wasserfahrzeuge und dergleichen mit den erfindungsgemäßen Fahrzeugfenstern ausgerüstet werden.

## Patentansprüche

1. Fahrzeugfenster (10, 14) aus einem transparenten Verbundwerkstoff, wobei der Verbundwerkstoff Fasern und ein Matrixmaterial aufweist, so dass das Fahrzeugfenster dazu befähigt ist, im Fensterbereich auftretende Strukturlasten aufzunehmen und die Fensterfunktion auch trotz einer Beschädigung des Fahrzeugfensters (10, 14) bereitstellen kann, wobei die Fasern und das Matrixmaterial transparent sind und im Wesentlichen den gleichen Brechungsindex aufweisen, **dadurch gekennzeichnet, dass** das Fahrzeugfenster (10, 14) dazu eingerichtet ist, in Fensterpositionen eines aus einem Verbundwerkstoff als aus mehreren Laminattagen (16) bestehendem Basismaterial hergestellten Fahrzeugrumpfs (2) das Basismaterial zu substituieren, und wobei das Fahrzeugfenster (10, 14) aus mehreren Laminatlagen (18) gefertigt ist und sich die Laminatlagen (18) des Fahrzeugfensters (10, 14) bei dessen Einbau in den Fahrzeugrumf mit Laminatlagen (16) des Fahrzeugrumpfs (2) überlappen.

2. Fahrzeugfenster (10, 14) nach Anspruch 1, **dadurch gekennzeichnet, dass** das Fahrzeugfenster (10, 14) eine längliche Form aufweist und sich im eingebauten Zustand im Wesentlichen parallel zu einer Richtungsachse (12) des Fahrzeugs als integraler Bestandteil entlang der Fahrzeughaut (8) erstreckten kann.

3. Fahrzeugfenster (10, 14) nach Anspruch 2, **dadurch gekennzeichnet, dass** das Fahrzeugfenster (10, 14) im eingebauten Zustand randseitig mit angrenzenden Bauteilen der Fahrzeughaut (8) verbunden werden kann.

4. Fahrzeugfenster (10, 14) nach Anspruch 2 oder 3, **dadurch gekennzeichnet, dass** bei dem Fahrzeugfenster (10, 14) Versteifungsbauteile (4, 6) der Struktur des Fahrzeugrumpfs (2) entlang der Innenseite des Fahrzeugfensters (10, 14) im eingebauten Zustand verlaufen können und mit dem Fahrzeugfenster (10, 14) verbunden werden können.

5. Fahrzeugfenster (10, 14) nach einem der vorhergehenden Ansprüche, **dadurch gekennzeichnet, dass** das Fahrzeugfenster (10, 14) zur Erhöhung der Steifigkeit und Festigkeit transparente Verstärkungsbauteile aufweist.

6. Fahrzeugfenster (10, 14) nach Anspruch 1, **dadurch gekennzeichnet, dass** das Fahrzeugfenster (10, 14) aus in den Fensterpositionen des Fahrzeugrumpfs (2) transparenten Fasern gebildet ist.

7. Fahrzeugfenster (10, 14) nach Anspruch 1, **dadurch gekennzeichnet, dass** das Fahrzeugfenster (10, 14) direkt mit der das Fahrzeugfenster (10, 14) umgebenden Struktur des Fahrzeugrumpfs (2) ohne zusätzlichen Fensterrahmen verbindbar werden kann.

8. Verfahren zum Herstellen eines Fahrzeugfensters (10, 14) aus einem transparenten Verbundwerkstoff, wobei der Verbundwerkstoff mit Fasern und einem Matrixmaterial ausgeführt wird, so dass das Fahrzeugfenster dazu befähigt ist, im Fensterbereich auftretende Strukturlasten aufzunehmen und die Fensterfunktion auch trotz einer Beschädigung des Fahrzeugfensters (10, 14) bereitstellen kann, wobei die Fasern und das Matrixmaterial transparent sind und im Wesentlichen den gleichen Brechungsindex aufweisen, **dadurch gekennzeichnet, dass**
in Fensterpositionen des aus einem Verbundwerkstoff als aus mehreren Laminatlagen (16) bestehendem Basismaterial herzustellenden Fahrzeugrumpf (2) das Basismaterial durch das Verbundmaterial des Fahrzeugfensters (10, 14) substituiert wird, und wobei das Fahrzeugfenster (10, 14) aus mehreren Laminatlagen (18) gefertigt wird und die Laminatlagen (18) des Fahrzeugfensters (10, 14) mit Laminatlagen (16) des Fahrzeugrumpfs (2) überlappt werden können.

9. Verfahren nach Anspruch 8, **dadurch gekennzeichnet, dass** das Fahrzeugfenster (10, 14) als integraler Bestandteil in die Fahrzeughaut (8) integriert werden kann, wobei das Fahrzeugfenster (10, 14) eine längliche Form aufweist und sich im eingebauten Zustand im Wesentlichen parallel zu einer Richtungsachse (12) des Fahrzeugs erstreckten kann.

10. Verfahren nach Anspruch 9, **dadurch gekennzeichnet, dass** das Fahrzeugfenster (10, 14) randseitig mit angrenzenden Bauteilen der Fahrzeughaut (8) verbunden wird.

11. Verfahren nach Anspruch 9 oder 10, **dadurch gekennzeichnet, dass** Versteifungsbauteile (4, 6) der Struktur des Fahrzeugrumpfs (2) entlang der Innenseite des Fahrzeugfensters (10, 14) verlaufend angeordnet und mit dem Fahrzeugfenster (10, 14) verbunden werden können.

12. Verfahren nach einem der Ansprüche 8-11, **dadurch gekennzeichnet, dass** an das Fahrzeugfenster (10, 14) zur Erhöhung der Steifigkeit und Festigkeit transparente Verstärkungsbauteile angeordnet werden.

13. Verfahren nach Anspruch 8, **dadurch gekennzeichnet, dass** das Fahrzeugfenster (10, 14) aus in den Fensterpositionen des Fahrzeugrumpfs (2) transparenten Fasern gebildet wird.

14. Verfahren nach Anspruch 8, **dadurch gekennzeichnet, dass** das Fahrzeugfenster (10, 14) direkt mit der das Fahrzeugfenster (10, 14) umgebenden Struktur des Fahrzeugrumpfs (2) ohne zusätzlichen Fensterrahmen verbunden wirden kann.

15. Verwendung eines Fahrzeugfensters (10, 14) nach einem der Ansprüche 1-7 in einem Flugzeug.

16. Flugzeug mit einem Fahrzeugfenster (10, 14) nach einem der Ansprüche 1-7.

## Claims

1. Vehicle window (10, 14) comprising a transparent composite material, wherein the composite material comprises fibres and a matrix material such that the vehicle window is capable of absorbing structural loads occurring in the window region and can provide the window function even in spite of damage to the vehicle window (10, 14), wherein the fibres and the matrix material are transparent and have substantially the same refractive index, **characterised in that** the vehicle window (10, 14) is configured to substitute the base material in window positions of a vehicle fuselage (2) produced from a composite material as the base material comprising a plurality of laminate layers (16), and wherein the vehicle window (10, 14) is produced from a plurality of laminate layers (18) and the laminate layers (18) of the vehicle window (10, 14) overlap with laminate layers (16) of the vehicle fuselage (2) upon the vehicle window being installed in the vehicle fuselage.

2. Vehicle window (10, 14) as claimed in Claim 1, **characterised in that** the vehicle window (10, 14) has an elongate shape and, when installed, can extend substantially parallel to a direction axis (12) of the vehicle as an integral component along the skin (8) of the vehicle.

3. Vehicle window (10, 14) as claimed in Claim 2, **characterised in that** when installed, the vehicle window (10, 14) can be connected along the edges to adjoining components of the skin (8) of the vehicle.

4. Vehicle window (10, 14) as claimed in Claim 2 or 3, **characterised in that** in the vehicle window (10, 14), reinforcing components (4, 6) of the structure of the vehicle fuselage (2) can run along the inside of the vehicle window (10, 14) when installed and can be connected to the vehicle window (10, 14).

5. Vehicle window (10, 14) as claimed in any one of the preceding Claims, **characterised in that** the vehicle window (10, 14) has transparent reinforcing components to increase the rigidity and strength.

6. Vehicle window (10, 14) as claimed in Claim 1, **characterised in that** the vehicle window (10, 14) is formed from fibres which are transparent in the window positions of the vehicle fuselage (2).

7. Vehicle window (10, 14) as claimed in Claim 1, **characterised in that** the vehicle window (10, 14) can be connectable directly to the structure, surrounding the vehicle window (10, 14), of the vehicle fuselage (2) without an additional window frame.

8. Method for producing a vehicle window (10, 14) from a transparent composite material, wherein the composite material is formed with fibres and a matrix material such that the vehicle window is capable of absorbing structural loads occurring in the window region and can provide the window function even in spite of damage to the vehicle window (10, 14), wherein the fibres and the matrix material are transparent and have substantially the same refractive index, **characterised in that** the base material is substituted by the composite material of the vehicle window (10, 14) in window positions of the vehicle fuselage (2) to be produced from a composite material as the base material consisting of a plurality of laminate layers (16), and wherein the vehicle window (10, 14) is produced from a plurality of laminate layers (18) and the laminate layers (18) of the vehicle window (10, 14) can be overlapped by laminate layers (16) of the vehicle fuselage (2).

9. Method as claimed in Claim 8, **characterised in that** the vehicle window (10, 14) can be integrated into the skin (8) of the vehicle as an integral component, wherein the vehicle window (10, 14) has an elongate shape and, when installed, can extend substantially parallel to a direction axis (12) of the vehicle.

10. Method as claimed in Claim 9, **characterised in that** the vehicle window (10, 14) is connected along the edges to adjoining components of the skin (8) of the vehicle.

11. Method as claimed in Claim 9 or 10, **characterised in that** reinforcing components (4, 6) of the structure of the vehicle fuselage (2) can be arranged to run along the inside of the vehicle window (10, 14) and can be connected to the vehicle window (10, 14).

12. Method as claimed in any one of Claims 8-11, **characterised in that** transparent reinforcing components are arranged on the vehicle window (10, 14) to increase the rigidity and strength.

13. Method as claimed in Claim 8, **characterised in that** the vehicle window (10, 14) is formed from fibres which are transparent in the window positions of the vehicle fuselage (2).

14. Method as claimed in Claim 8, **characterised in that** the vehicle window (10, 14) can be connected directly to the structure, surrounding the vehicle window (10, 14), of the vehicle fuselage (2) without an additional window frame.

15. Use of a vehicle window (10, 14) as claimed in any one of Claims 1-7 in an aircraft.

16. Aircraft having a vehicle window (10, 14) as claimed in any one of Claims 1-7.

## Revendications

1. Fenêtre d'avion (10, 14) constituée d'un matériau composite transparent, le matériau composite présentant des fibres et un composite à matrices, si bien que la fenêtre d'avion est capable d'absorber des charges structurelles survenant dans la zone de la fenêtre et peut réaliser la fonction de fenêtre même malgré un endommagement de la fenêtre d'avion (10, 14), les fibres et le composite à matrices étant transparents et présentant sensiblement le même indice de réfraction, **caractérisée en ce que** la fenêtre d'avion (10, 14) est conçue pour remplacer le matériau de base dans les positions dédiées aux fenêtres d'une coque d'avion (2) fabriquée à partir d'une matière composite et servant de matériau de base constitué de plusieurs couches de laminé (16), et la fenêtre d'avion (10, 14) étant fabriquée à partir de plusieurs couches de laminé (18) et les couches de laminé (18) de la fenêtre d'avion (10, 14) se chevauchant avec les couches de laminé (16) de la coque d'avion (2) lors du montage de la fenêtre dans la coque d'avion.

2. Fenêtre d'avion (10, 14) selon la revendication 1, **caractérisée en ce que** la fenêtre d'avion (10, 14) présente une forme allongée et peut, à l'état monté, s'étendre en tant que partie intégrante le long de la peau d'avion (8) sensiblement parallèlement à un axe directionnel (12) de l'avion.

3. Fenêtre d'avion (10, 14) selon la revendication 1, **caractérisée en ce que** la fenêtre d'avion (10, 14) peut, à l'état monté, être reliée périphériquement à des composants adjacents de la peau d'avion (8).

4. Fenêtre d'avion (10, 14) selon la revendication 2 ou 3, **caractérisée en ce que** dans la fenêtre d'avion (10, 14), des composants de renforcement (4, 6) de la structure de la coque d'avion (2) peuvent s'étendre le long du côté intérieur de la fenêtre d'avion (10, 14) à l'état monté et peuvent être reliés à la fenêtre d'avion (10, 14).

5. Fenêtre d'avion (10, 14) selon l'une des revendications précédentes, **caractérisée en ce que** la fenêtre d'avion (10, 14) présente des composants de renforcement transparents pour augmenter la rigidité et la solidité.

6. Fenêtre d'avion (10, 14) selon la revendication 1, **caractérisée en ce que** la fenêtre d'avion (10, 14) est formée à partir de fibres transparentes dans les positions dédiées aux fenêtres de la coque d'avion (2).

7. Fenêtre d'avion (10, 14) selon la revendication 1, **caractérisée en ce que** la fenêtre d'avion (10, 14) peut être directement reliée à la structure de la coque d'avion (2) entourant la fenêtre d'avion (10, 14) sans cadre de fenêtre supplémentaire.

8. Procédé de fabrication d'une fenêtre d'avion (10, 14) constituée d'un matériau composite transparent, le matériau composite étant réalisé avec des fibres et un composite à matrices, si bien que la fenêtre d'avion est capable d'absorber des charges structurelles survenant dans la zone de la fenêtre et peut réaliser la fonction de fenêtre même malgré un endommagement de la fenêtre d'avion (10, 14), les fibres et le composite à matrices étant transparents et présentant sensiblement le même indice de réfraction, **caractérisé en ce que** le matériau de base est remplacé par le matériau composite de la fenêtre d'avion (10, 14) dans les positions dédiées aux fenêtres de la coque d'avion (2) à fabriquer à partir d'une matière composite et servant de matériau de base constitué de plusieurs couches de laminé (16), et la fenêtre d'avion (10, 14) étant fabriquée à partir de plusieurs couches de laminé (18) et les couches de laminé (18) de la fenêtre d'avion (10, 14) pouvant se chevaucher avec les couches de laminé (16) de la coque d'avion (2).

9. Procédé selon la revendication 8, **caractérisé en ce que** la fenêtre d'avion (10, 14) peut être intégrée dans la peau d'avion (8) en tant que partie intégrante, la fenêtre d'avion (10, 14) présentant une forme allongée et pouvant, à l'état monté, s'étendre sensiblement parallèlement à un axe directionnel (12) de l'avion.

10. Procédé selon la revendication 9, **caractérisé en ce que** la fenêtre d'avion (10, 14) est reliée périphériquement à des composants adjacents de la peau d'avion (8).

11. Procédé selon la revendication 9 ou 10, **caractérisé en ce que** des composants de renforcement (4, 6) de la structure de la coque d'avion (2) peuvent être disposés en s'étendant le long du côté intérieur de la fenêtre d'avion (10, 14) et être reliés à la fenêtre d'avion (10, 14).

12. Procédé selon l'une des revendications 8 à 11, **caractérisé en ce que** des composants de renforcement transparents peuvent être disposés sur la fenêtre d'avion (10, 14) pour augmenter la rigidité et la solidité.

13. Procédé selon la revendication 8, **caractérisé en ce que** la fenêtre d'avion (10, 14) est formée à partir de fibres transparentes dans les positions dédiées aux fenêtres de la coque d'avion (2).

14. Procédé selon la revendication 8, **caractérisé en ce que** la fenêtre d'avion (10, 14) peut être directement reliée à la structure de la coque d'avion (2) entourant la fenêtre d'avion (10, 14) sans cadre de fenêtre supplémentaire.

15. Utilisation d'une fenêtre d'avion (10, 14) selon l'une des revendications 1 à 7 dans un avion.

16. Avion doté d'une fenêtre d'avion (10, 14) selon l'une des revendications 1 à 7.
